# DEMANDE DE BREVET EUROPEEN

(11) **EP 2 604 831 A1**
(43) Date de publication de la demande: **19.06.2013**
(21) Numéro de dépôt: 12193305.5
(22) Date de dépôt: 20.11.2012
(51) Int. Cl.: F02D 41/00, F02D 19/12, F02M 25/00, F02D 41/22

(54) **Procédé de régéneration d'un filtre à particules, système de régéneration mettant en oeuvre ce procédé et vehicule automobile comprenant un tel système de régéneration**

(30) Priorité: 16.12.2011 FR 1161833
(71) Demandeur: PEUGEOT CITROËN AUTOMOBILES SA, 78140 Velizy-Villacoublay (FR)
(72) Inventeur: Lesueur, Jean-Nicolas, 92250 La Garenne Colombes (FR); George, Aubert, 78750 Mareil Marly (FR)

(57) **Abrégé**

L'invention concerne un procédé de régénération d'un filtre à particules intégré dans une ligne d'échappement d'un moteur Diesel (2) d'un véhicule automobile, comprenant une étape de régénération du filtre à particules avec additivation d'un additif dans le carburant alimentant le moteur Diesel au moyen d'un dispositif d'additivation (21), pour réduire la température des gaz d'échappement nécessaire à la régénération du filtre à particules. Le procédé comprend en outre les étapes consistant en : a) l'estimation de l'état du dispositif d'additivation (21), et b) la modification de l'injection de carburant dans le moteur Diesel (2), dans le cas où le dispositif d'additivation est dans un état défaillant.

## Description

La présente invention concerne un procédé de régénération d'un filtre à particules d'un moteur Diesel, un système mettant en oeuvre ce procédé de régénération et un véhicule automobile comprenant un tel système de régénération.

Pour satisfaire aux normes antipollution, les moteurs Diesel sont couplés avec des moyens de dépollution, notamment des pots d'échappements catalytiques et/ou des filtres à particules. Ces derniers sont destinés à filtrer les particules issues de la combustion du carburant dans le moteur. Les filtres à particules s'encrassent au cours du temps. Pour éviter un colmatage des filtres à particules, il est nécessaire de procéder à leur régénération. Il existe trois procédés principaux de régénération d'un filtre à particules.

Selon un premier procédé, une injection de carburant est réalisée directement dans le filtre à particules quand celui-ci doit être régénéré. Ce carburant est brulé dans le filtre à particules, où il provoque la combustion des suies retenues dans le filtre à particules. Ce procédé implique cependant une consommation importante de carburant.

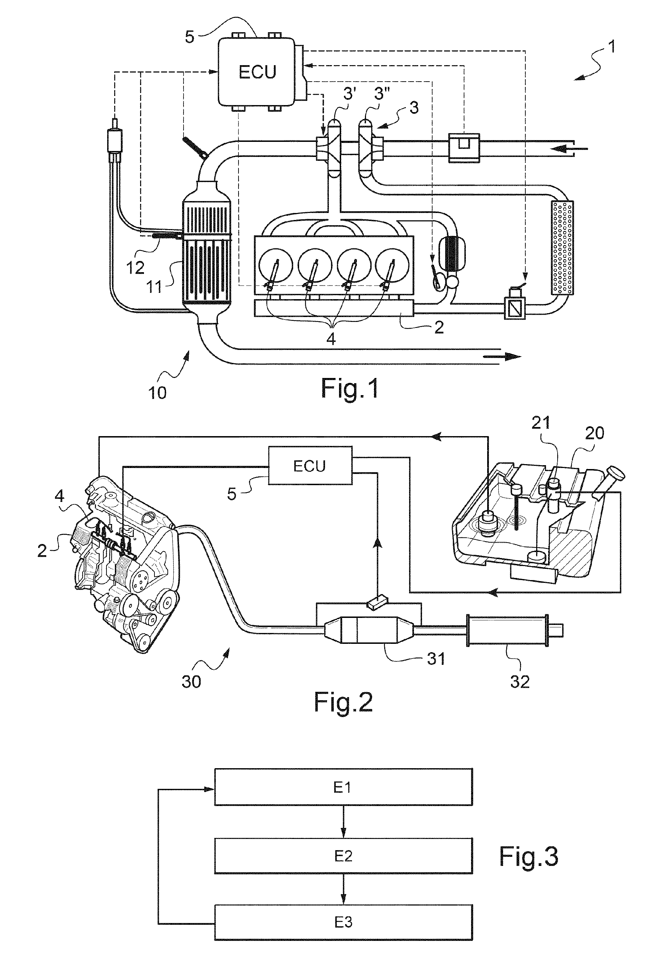

Un deuxième procédé peut être mis en oeuvre dans un ensemble de motorisation 1 tel qu'illustré à la figure 1. Cet ensemble de motorisation 1 comprend un moteur Diesel 2 comprenant ici un turbocompresseur 3. Le carburant est amené depuis un réservoir de carburant (non représenté) vers des injecteurs 4 qui sont contrôlés par une unité électronique de contrôle 5 (ECU). Les gaz d'échappement générés par la combustion du carburant dans les cylindres du moteur Diesel 2 sont dirigés vers une turbine 3' qui met en mouvement un compresseur 3" du turbocompresseur 3. Les gaz d'échappement sont ensuite dirigés vers des moyens de dépollution 10, ici un pot catalytique comprenant un filtre à particules 11. Le pot catalytique 10 est muni d'un détecteur 12 permettant de détecter le colmatage du filtre à particules 12 des particules.

Lorsque le détecteur 12 indique à l'ECU 5 un colmatage du filtre à particules 11, l'ECU commande une loi d'injection de carburant dans les cylindres du moteur permettant d'augmenter la température des gaz d'échappement dans le filtre à particules. Cette augmentation de température des gaz d'échappement provoque la combustion des suies et particules se trouvant dans le filtre à particules. Les suies et les particules brulées sont ensuite évacuées rendant le filtre à particules de nouveau opérationnel.

Ce procédé nécessite cependant une augmentation de température importante, qui ne peut être obtenue qu'en consommant une importante quantité de carburant.

Pour réduire la température des gaz d'échappement nécessaire à la régénération du filtres à particules, il est connu de procéder à l'additivation du carburant (c'est-à-dire qu'on ajoute un additif dans le carburant). Cette additivation, qui est réalisé par un dispositif d'additivation prévu à cet effet, permet ainsi de consommer moins de carburant pour régénérer le filtre à particules.

Cependant, ce procédé présente l'inconvénient qu'en cas de défaillance du dispositif d'additivation, la régénération du filtre à particules n'est pas réalisée ou, tout du moins, pas complètement. Le filtre à particules peut alors se boucher et provoquer un endommagement de la ligne d'échappement voire du moteur.

Les documents FR-A-2 828 234 et FR-A-2 807 470 décrivent des variantes de procédés décrits ci-dessus.

II existe donc un besoin pour un procédé de régénération ne présentant pas les inconvénients précités.

A cette fin, la présente invention propose un procédé de régénération d'un filtre à particules intégré dans une ligne d'échappement d'un moteur Diesel d'un véhicule automobile, comprenant une étape de régénération du filtre à particules avec additivation d'un additif dans le carburant alimentant le moteur Diesel au moyen d'un dispositif d'additivation, pour réduire la température des gaz d'échappement nécessaire à la régénération du filtre à particules, remarquable en ce qu'il comprend en outre les étapes consistant en :
a) l'estimation de l'état du dispositif d'additivation, et
b) la modification de l'injection de carburant dans le moteur Diesel, dans le cas où le dispositif d'additivation est dans un état défaillant.

Ainsi, lorsqu'une défaillance du dispositif d'additivation est détectée, le procédé propose de modifier l'injection de carburant dans le moteur. Cette modification peut notamment permettre d'atteindre la température nécessaire à la régénération du filtre à particules, sans additif dans le carburant.

Selon une variante du procédé, à l'étape b), la modification comprend une augmentation d'une injection tardive de carburant dans le moteur Diesel.

Selon une variante, le procédé comprend en outre une étape d'avertissement d'un utilisateur dans le cas où le dispositif d'additivation est dans un état défaillant.

Selon une variante, le procédé comprend en outre une étape, ultérieure à l'étape b), de réparation du dispositif d'additivation. La réparation peut être une réparation effective du dispositif, ou peut être un remplacement complet de celui-ci.

Selon une variante, le procédé comprend en outre une étape de vidange de l'huile moteur, de préférence lors de la réparation du dispositif d'additivation, ou après la réparation. Mais cette étape peut également être déconnectée de l'éventuelle réparation du dispositif d'aditivation.

Selon un autre aspect, l'invention propose un système de régénération d'un filtre à particules intégré dans une ligne d'échappement d'un moteur Diesel de véhicule automobile, le système comprenant :
● une unité électronique de contrôle ;
● des injecteurs de carburant dans le moteur Diesel commandés par l'unité électronique de contrôle ;
● un dispositif d'additivation d'un additif au carburant pour abaisser la température des gaz d'échappement nécessaire pour régénérer le filtre à particules ;
● des moyens de vérification de l'état de fonctionnement du dispositif d'additivation ;
caractérisé en ce que l'unité électronique de contrôle est spécialement conçue pour mettre en oeuvre le procédé de régénération tel que décrit ci-avant dans toutes ses combinaisons.

Selon un autre aspect, l'invention se rapporte à un véhicule automobile comprenant :
● un moteur Diesel ;
● une ligne d'échappement comprenant un filtre à particules agencés pour filtrer les particules des gaz de combustion du moteur Diesel ;
● un système de régénération du filtre à particules tel que décrit ci-dessus dans toutes ses variantes.

Selon, une variante, le filtre à particules est du type catalysé.

Selon une variante, le véhicule automobile comprend un réservoir de carburant alimentant le moteur, le dispositif d'additivation étant intégré dans le réservoir de carburant.

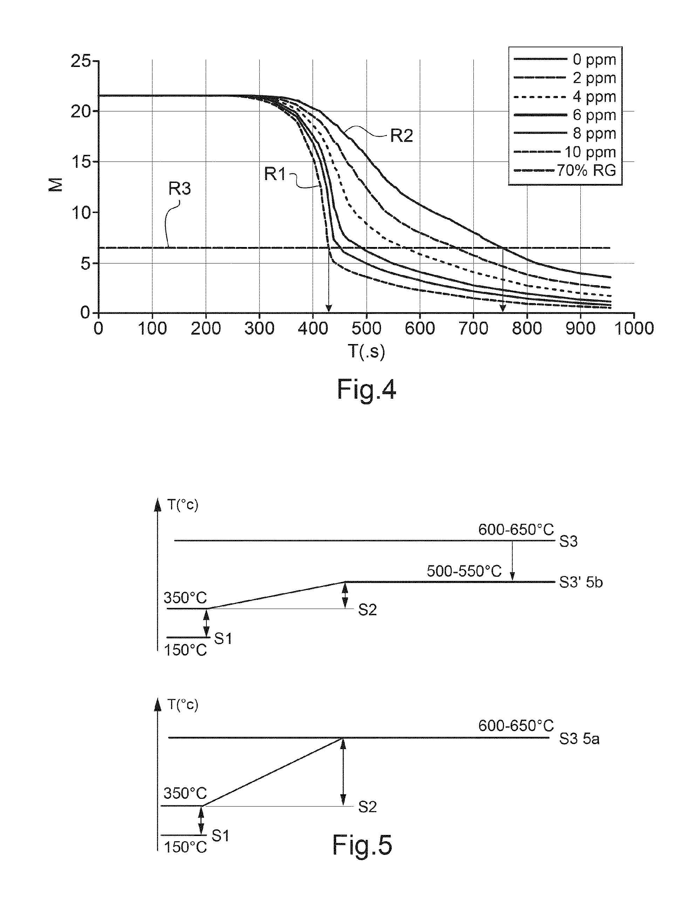

D'autres caractéristiques et avantages de l'invention apparaîtront à la lecture de la description qui suit d'un mode de réalisation préféré de l'invention, donnée à titre d'exemple et en référence aux dessins annexés qui représentent :
● La figure 1, un schéma d'un ensemble de motorisation selon l'art antérieur ;
● La figure 2, un schéma d'un ensemble de motorisation selon l'invention ;
● La figure 3, un synoptique de fonctionnement du procédé selon l'invention ;
● La figure 4, des courbes illustrant la catalyse des particules avec et sans utilisation d'un additif ;
● La figure 5, des courbes illustrant l'effet de l'additif sur la combustion des particules.

La figure 2 illustre un ensemble de motorisation d'un véhicule automobile comprenant un réservoir de carburant 20 alimentant en carburant le moteur Diesel 2. Le carburant est injecté dans les cylindres de combustion par les injecteurs 4 où il est brulé. Les gaz d'échappement résultant de la combustion sont rejetés dans l'atmosphère via une ligne d'échappement 30. La ligne d'échappement 30 comprend des moyens de dépollution 31 - en l'espèce un filtre à particules et un catalyseur d'oxydation disposé en amont du filtre à particules - et un silencieux 32. En variante, les moyens de dépollutions 31 peuvent prendre la forme d'un filtre à particule catalysé.

L'ensemble de motorisation est muni d'un système de régénération du filtre à particules. Le système de régénération comprend les injecteurs de carburant 4, associés au moteur Diesel 2 et une unité électronique de contrôle 5 (ECU) qui commande les injecteurs.

Le système de régénération comprend également un dispositif d'additivation 21 au carburant d'un additif permettant de réduire la température des gaz d'échappement nécessaire à la régénération du filtre à particules. Le dispositif d'additivation 21 est avantageusement disposé dans le réservoir de carburant 20. Le dispositif d'additivation 21 comporte un réservoir d'additif et un injecteur d'additif pour injecter de l'additif dans le carburant.

Le système d'aide à la régénération comprend également des moyens de vérification (non représentés) de l'état du dispositif d'additivation 21. Les moyens de vérification peuvent comprendre différents capteurs et/ou détecteurs.

Les moyens de vérification peuvent être un détecteur de présence d'additif dans le carburant, un détecteur de niveau d'additif dans le réservoir d'additif, une sonde de mesure du taux d'additif dans le carburant et/ou une combinaison de ces différents éléments.

L'unité électronique de contrôle 5 (ECU) du système de régénération est spécialement conçu pour mettre un oeuvre le procédé de régénération suivant, illustré sur la figure 3.

Ce procédé de régénération comprend tout d'abord une étape E1 de régénération du filtre à particules avec additivation d'un additif dans le carburant alimentant le moteur Diesel au moyen du dispositif d'additivation 21. L'additif permet de réduire la température des gaz d'échappement nécessaire à la régénération du filtre à particules. Par suite, une quantité plus faible de carburant est nécessaire pour régénérer le filtre à particules.

Le tableau ci-dessous résume les conditions de régénération du filtre à particule en fonction de l'apport d'additif (additivé) ou non (catalyse simple) :

| Type de régénération | Additivé | Catalyse simple |
|---|---|---|
| Température de régénération nécessaire (°C) | 500-550 | 600-650 |
| Vitesse de régénération à 500°C | 100% en 5 min | 90% après 40 min |
| Vitesse de régénération à 600°C | 100% en 4 min | 100% en 10 min |

On constate que l'additivation du carburant permet de réduire sensiblement les températures de catalyse et donc de diminuer la consommation de carburant nécessaire pour atteindre les températures de gaz d'échappement nécessaires à la régénération.

Les figures 4 et 5 illustrent également l'effet de l'additif sur la température de catalyse des particules. La figure 4 illustre plus particulièrement l'effet de la quantité d'additif sur le temps nécessaire pour réaliser la régénération complète du filtre à particules. Le temps de régénération varie entre une courbe R1 correspondant à 10ppm d'additif et une courbe R2 correspondant à l'absence d'additif. Les quatre courbes intermédiaires correspondent respectivement à des quantités de 2, 4, 6 et 8 ppm.

La courbe R3 horizontale, correspond à une régénération de 70% du filtre à particules. On constate que pour obtenir une régénération de 70% du filtre à particules, il faut moins de 450 secondes avec 10ppm d'additif (courbe R1) contre 750 secondes en l'absence d'additif (courbe R2).

La figure 5a illustre un procédé d'injection pouvant être mis en oeuvre durant l'étape E1 du procédé pour atteindre une température de l'ordre de 500-550 °C permettant la régénération du filtre à particules dans le cas où le carburant est additivé. Il est tout d'abord procédé à un décalage des injections principales pour augmenter la température des gaz d'échappement d'environ 150°C à environ 350°C (S1). Il est ensuite procédé à une post-injection tardive pour augmenter la température des gaz d'échappement en sortie du catalyseur d'environ 350°C à environ 500-550°C. Ceci permet la réalisation d'un exotherme dans le catalyseur par oxydation des hydrocarbures imbrulés injectés lors de la post-injection tardive. En parallèle, une réduction de la température de combustion des suies est obtenue par utilisation d'un additif dans le carburant, d'une température d'environ 600-650°C à environ 500-550°C.

Dans un deuxième temps, le procédé comprend une étape E2 d'estimation de l'état du dispositif d'additivation 21.

Dans le cas où il est constaté, à l'étape E2, que le dispositif d'additivation est dans un état défaillant, alors, selon le procédé, on modifie l'injection de carburant dans le moteur. L'état défaillant du dispositif d'additivation peut notamment se traduire par l'absence ou le manque d'additif dans le carburant. L'état défaillant du dispositif d'additivation correspond également au cas où le réservoir d'additif est vide.

Dans le cas où le dispositif d'additivation est défaillant, l'injection de carburant, telle que décrite en regard de la figure 5a, ne permet pas d'atteindre la température nécessaire à la régénération du filtre à particules. On met alors en oeuvre une injection différente de carburant qui vise à permettre aux gaz d'échappement du moteur Diesel d'atteindre la température nécessaire dans le filtre à particules pour brûles les suies qui le colmatent. Ce procédé d'injection est illustré à la figure 5b. Il se différencie du procédé d'injection décrit ci-avant en regard de la figure 5a en ce qu'il comprend un post-injection tardive plus importante (c'est-à-dire qu'un plus grand volume de carburant est injecté lors de cette post-injection tardive) pour que les gaz d'échappement atteignent une température de l'ordre de 600-650°C dans le catalyseur, en amont du filtre à particules.

On rappelle qu'une post-injection tardive est une injection de carburant réalisée après l'injection « normale » de carburant, qui est réalisée durant le temps de compression. La post injection tardive est réalisé durant le temps de détente, avant le temps d'échappement des gaz de combustion.

Le procédé permet ainsi de continuer à rouler, même en cas de défaillance du dispositif d'additivation sans risque de colmatage du filtre à particules.

L'étape E2 du procédé de régénération peut en outre comporter l'avertissement d'un utilisateur dans le cas où le dispositif d'additivation est dans un état défaillant. Cet avertissement peut être réalisé au moyen d'un voyant lumineux sur le tableau de bord du véhicule automobile ou par l'apparition d'un message sur ce même tableau de bord.

Le procédé peut se poursuivre par une étape E3 ultérieure de réparation du dispositif d'additivation (qui peut consister en un remplacement du dispositif d'additivation). La réparation du dispositif d'additivation est de préférence complétée par une étape de vidange de l'huile moteur. Le procédé peut alors reprendre en mettant en oeuvre une régénération du filtre à particules avec additivation du carburant injecté.

Bien évidement, l'invention n'est pas limitée au mode de réalisation décrit précédemment mais englobe tous les modes alternatifs dans la limite de la portée des revendications.

## Revendications

1. Procédé de régénération d'un filtre à particules intégré dans une ligne d'échappement d'un moteur Diesel (2) d'un véhicule automobile, comprenant une étape (E1) de régénération du filtre à particules avec additivation d'un additif dans le carburant alimentant le moteur Diesel au moyen d'un dispositif d'additivation (21), pour réduire la température des gaz d'échappement nécessaire à la régénération du filtre à particules, **caractérisé en ce qu'**il comprend en outre les étapes (E2) consistant en :
a) l'estimation de l'état du dispositif d'additivation (21), et
b) la modification de l'injection de carburant dans le moteur Diesel (2), dans le cas où le dispositif d'additivation est dans un état défaillant.

2. Procédé de régénération selon la revendication 1, dans lequel, à l'étape b), la modification comprend une augmentation d'une injection tardive de carburant dans le moteur Diesel (2).

3. Procédé de régénération selon l'une des revendications 1 à 2, comprenant en outre une étape d'avertissement d'un utilisateur dans le cas où le dispositif d'additivation est dans un état défaillant.

4. Procédé de régénération selon l'une quelconque des revendications 1 à 3, comprenant en outre une étape, ultérieure à l'étape b), de réparation du dispositif d'additivation.

5. Procédé de régénération selon l'une quelconque des revendications précédentes, comprenant en outre une étape de vidange de l'huile moteur.

6. Système de régénération d'un filtre à particules intégré dans une ligne d'échappement d'un moteur Diesel (2) de véhicule automobile, le système comprenant :
● une unité électronique de contrôle (5) ;
● des injecteurs de carburant (4) dans le moteur Diesel (2) commandés par l'unité électronique de contrôle (5) ;
● un dispositif d'additivation (21) d'un additif au carburant pour abaisser la température des gaz d'échappement nécessaire pour régénérer le filtre à particules ;
● des moyens de vérification de l'état de fonctionnement du dispositif d'additivation (21) ;
**caractérisé en ce que** l'unité électronique de contrôle est spécialement conçue pour mettre en oeuvre le procédé de régénération de l'une quelconque des revendications 1 à 5.

7. Véhicule automobile comprenant :
- un moteur Diesel (2) ;
- une ligne d'échappement (30) comprenant un filtre à particules agencés pour filtrer les particules des gaz de combustion du moteur Diesel (2) ;
- un système de régénération du filtre à particules selon la revendication 6.

8. Véhicule automobile selon la revendication 7, dans lequel le filtre à particules est du type catalysé.

9. Véhicule automobile selon la revendication 7 ou 8, comprenant un réservoir de carburant alimentant le moteur, le dispositif d'additivation (21) étant intégré dans le réservoir de carburant (20).
